# EUROPÄISCHE PATENTSCHRIFT

(11) **EP 3 760 463 B1**
(45) Veröffentlichungstag und Bekanntmachung des Hinweises auf die Patenterteilung: **11.01.2023**
(21) Anmeldenummer: 20177417.1
(22) Anmeldetag: 29.05.2020
(51) Int. Cl.: B60K 7/00, B60K 17/04, B60K 17/30, B66F 9/075

(54) **ANTRIEBSVORRICHTUNG FÜR EIN FLURFÖRDERFAHRZEUG MIT PLANETENGETRIEBE**
DRIVE DEVICE FOR AN INDUSTRIAL TRUCK WITH PLANETARY GEAR
DISPOSITIF D'ENTRAÎNEMENT POUR UN CHARIOT DE MANUTENTION AVEC ENGRENAGE PLANÉTAIRE

(30) Priorität: 28.06.2019 DE 102019004511
(43) Veröffentlichungstag der Anmeldung: 06.01.2021
(73) Patentinhaber: Kordel Antriebstechnik GmbH, 48249 Dülmen (DE)
(72) Erfinder: Raue, Josef, 48249 Dülmen (DE)
(74) Vertreter: Demski, Siegfried

(56) Entgegenhaltungen:
- EP-A2- 1 502 792
- DD-A1- 112 232
- DE-U1-202017 004 964

## Beschreibung

Die Erfindung betrifft eine Antriebsvorrichtung für ein Fahrzeug, insbesondere Flurförderfahrzeuge oder vergleichbare Fahrzeuge, umfassend zumindest ein Getriebegehäuse mit mindestens einer Getriebestufe zum Antrieb wenigstens eines Laufrades, einen Flanschanschluss für eine Fahrzeugchassisbefestigung und einen Flanschanschluss für einen Antriebsmotor, wobei die wenigstens eine Getriebestufe aus einem Planetengetriebe, reduzierten Planetengetriebe, Excentergetriebe oder Wolfrom-Getriebe besteht.

Zum Heben, Stapeln und Transportieren von Warengütern werden sogenannten Flurförderfahrzeug eingesetzt, die auch als Gabelstapler bezeichnet werden. Die Flurförderfahrzeuge sind hierbei in der Regel so konstruiert, dass der Bediener auf dem Flurförderfahrzeug aufsitzen kann. Derartige Flurförderfahrzeuge sind normalerweise mit einer Lenkunterstützung in Form eines elektrischen Lenkantriebs versehen, damit wie bei herkömmlichen Fahrzeugen mit geringer Krafteinwirkung das Flurförderfahrzeug gefahren werden kann. Des Weiteren sind kleinere Flurförderfahrzeuge bekannt, welche als Mitgehfahrzeuge bezeichnet werden. Derartige Flurförderfahrzeuge weisen in der Regel eine Fahrzeugdeichsel auf, welche direkt an dem Fahrantrieb des Gabelstaplers befestigt ist. Durch Auslenken der Fahrzeugdeichsel kann hierbei die Lenkung des Flurförderfahrzeuges beziehungsweise dem Mitgehgerät ohne Lenkhilfe erfolgen.

Aus der DE 10 2012 214 193 A1 ist beispielsweise eine lenkbare Antriebsvorrichtung für Flurförderfahrzeuge bekannt, welche mit einer Antriebseinrichtung und einer Lenkeinrichtung ausgestattet ist. Über ein Drehkranzlager wird eine drehbewegliche Aufhängung für die Antriebseinrichtung und Lenkeinrichtung erreicht, wobei beispielsweise der Drehkranzlageraußenring mit dem Chassis des Flurförderfahrzeuges verbunden ist.

Aus der EP 1 725 415 B1 ist ein Lenk- und Radantrieb für ein Flurförderfahrzeug bekannt. Der Antrieb erfolgt über einen Fahrmotor und zwei Stirnräder, wobei der Fahrmotor, der Lenkmotor und das Lenkgetriebe koaxial hintereinander angeordnet sind.

Aus der DE 10 2013 200 388 A1 ist ein Antrieb für ein Flurförderfahrzeug mit Lenkunterstützung bekannt. In diesem Fall handelt es sich um ein Flurförderfahrzeug mit Deichsel, die von einem Bediener zur Steuerung der Fahrtrichtung und des Antriebsmotors verwendet wird. Die Deichsel ist in diesem Fall mit einem bei einer Lenkbewegung des Rades mitdrehenden Bauteil bezüglich der Lenkachse drehfest verbunden.

Aus der EP 1 502 792 A2 ist eine Antriebseinheit für ein Flurförderfahrzeug bekannt, welches ein Getriebegehäuse mit mindestens einer Getriebestufe aufweist und über einen Flanschanschluss mit einem Fahrzeugchassis verbunden ist. Der Antriebsmotor ist horizontal ausgerichtet und mit der ersten Getriebestufe verbunden.

Aus der DD 112 232 A1 ist ein hydraulischer Einzelradantrieb für gelenkte Räder einer selbstfahrenden Landmaschine bekannt. Der hydraulische Antrieb ist über einen Neigungswinkel zur Vertikalen gegenüber dem Fahrzeugchassis beziehungsweise den Laufrädern angeordnet und über ein Gabelteil mit dem Chassis verbunden.

Aus der DE 20 2017 004 964 U1 ist eine Antriebsvorrichtung für ein Flurförderfahrzeug bekannt, bei dem der Antriebsmotor ebenfalls unter einem Neigungswinkel zur Vertikalen angeordnet ist, wobei der Motor mit Motorschild in einem Drehkranzlager befestigt ist.

Die aus dem Stand der Technik bekannten Antriebsvorrichtungen verwenden einen axial angeordneten oder gegebenenfalls querliegenden Fahrmotor mit einem Untersetzungsgetriebe. Diese Antriebsvorrichtungen zeichnen sich dadurch aus, dass das verwendete Drehkranzlager beziehungsweise Schwenklager einen entsprechend großen Wälzkreisdurchmesser aufweist, wodurch ein relativ großer Schwenkradius des Fahrgetriebes erforderlich ist. Bei einem kleineren Wälzkreisdurchmesser des Drehkranzlagers und somit in Folge auch einem kleineren Schwenkradius des Fahrgetriebes besteht nicht mehr die Möglichkeit, dass der Motor weitestgehend in das Drehkranzlager eintaucht. Somit vergrößert sich die Baulänge der gesamten Antriebsvorrichtung.

Im Stand der Technik werden für Flurförderfahrzeuge fast überwiegend Drehkranzlager eingesetzt, damit entsprechend große Gewichte seitens der Flurförderfahrzeuge aufgenommen werden können, um einen optimalen Schwenkradius zu ermöglichen. Drehkranzlager erfordern hierbei aber eine plane Fläche an dem Chassis des Flurförderfahrzeuges, um eventuelle Verspannungen des Drehkranzlagers zu vermeiden. Durch Leichtbauweise stehen diese Montageflächen in der Regel nicht immer zur Verfügung, sodass es zu Verspannungen innerhalb der Drehkranzlager kommen kann.

Der vorliegenden Erfindung liegt die Aufgabe zugrunde, eine neue Antriebsvorrichtung für Flurförderfahrzeuge aufzuzeigen, welche die Übertragung eines kleinen Antriebsmoments des Motors kompensiert und eine einfache Möglichkeit der Anbindung an das Fahrzeugchassis ermöglicht.

Erfindungsgemäß ist zur Lösung der Aufgabe eine Antriebsvorrichtung mit den Merkmalen des Anspruchs 1 vorgesehen. Dabei ist vorgesehen, dass der Antriebsmotor gegenüber der Vertikalen unter einem Winkel von 15 bis 25 Grad, vorzugsweise 20 bis 23 Grad, besonders bevorzugt von 21 Grad angeordnet ist und der Flanschanschluss für eine Fahrzeugchassisbefestigung derart ausgebildet ist, dass das Getriebegehäuse über eine Flanschaufhängung mit dem Chassis des Fahrzeugs verbunden ist. Weitere vorteilhafte Ausgestaltungen der Antriebsvorrichtung sind in den Unteransprüchen angegeben.

Die erfindungsgemäße Antriebsvorrichtung weist die besonderen Merkmale auf, dass ein Planetengetriebe beziehungsweise ein reduziertes Planetengetriebe, Excentergetriebe oder Wolfrom-Getriebe verwendet wird. Durch die vorgenannten Getriebe kann ein relativ kleines Drehmoment des Motors mit einer höheren Eingangsdrehzahl höher übersetzt werden, wodurch ein ausreichendes Drehmoment für die Antriebsvorrichtung erzielt wird. Zusätzlich erfolgt die Anordnung des Antriebsmotors gegenüber der Vertikalen unter einem Winkel größer null Grad, um eine Begrenzung der Bauraumhöhe zu erzielen. Zur Befestigung der Antriebsvorrichtung mit dem Flurförderfahrzeug wird eine Flanschaufhängung mit dem Chassis gewählt.

Durch die Verwendung eines Planetengetriebes, reduzierten Planetengetriebe, Excentergetriebe oder einem Wolfrom-Getriebe kann die relativ hohe Drehzahl des Antriebsmotors deutlich reduziert werden. Des Weiteren kann mithilfe einer solchen Antriebsstufe in Form beispielsweise eines Planetengetriebes ein ausreichendes Drehmoment übertragen werden, welches bei Antriebsvorrichtungen dieser Art erforderlich ist. Ein hohes Drehmoment ist bei Flurförderfahrzeugen wichtig, weil die Flurförderfahrzeuge zum Transport von Lasten vorgesehen sind und das Laufrad zum Beispiel aus dem Stand anfahren muss. Zum Erreichung einer ausreichenden Drehmomentübertragung und erforderlichen Untersetzung wird ein Planetengetriebe, gegebenenfalls auch ein reduziertes Planetengetriebe, Excentergetriebe oder Wolfrom-Getriebe eingesetzt, welches eine hohe Untersetzung mit einem entsprechend hohen Drehmoment zur Verfügung stellt. Speziell im Fall der Mitgehwagen, welche in der Regel für geringere Lasten ausgelegt sind, reicht ein reduziertes Drehmoment aus, sodass in diesem Fall eine Reduzierung der Motorgröße möglich ist. Durch die Planetenstufe kann hierbei eine deutliche Verringerung des Außendurchmessers der ersten Getriebestufe erreicht werden, was zu geringeren Abmessungen der Antriebsvorrichtung führt, wodurch der Bauraum im oberen Bereich des Getriebes erheblich reduziert werden kann, zudem wird durch das Planetengetriebe die Untersetzung der ersten Getriebestufe im Gegensatz zu einer Stirnradverzahnung deutlich erhöht.

Die vorgesehene Flanschaufhängung ist hierbei einenends mit dem Chassis und anderenends mit dem Getriebegehäuse verbunden, wobei die Flanschaufhängung in der Regel aus zwei Quertraversen einer Anschlussfläche und einer Lagerbohrung besteht. Die Flanschaufhängung kann aus mehreren Einzelteilen und somit mehrteilig ausgeführt sein, aber wird vorzugsweise einstückig beispielsweise in Form eines Gusskörpers ausgebildet. Mit ihrer Anschlussfläche liegt die Flanschaufhängung hierbei am Chassis des Fahrzeuges an und ermöglicht auf diese Weise eine einfache Verbindung mit dem Fahrzeug.

In Ausgestaltung der Erfindung ist vorgesehen, dass die Flanschaufhängung eine Lagerbohrung aufweist und über zumindest ein Lagerelement einen Lagerbolzen aufnimmt, welcher mittels eines Schraubbolzens mit dem Getriebegehäuse verbunden ist. Beispielhaft wird hierbei vorgeschlagen, dass die Flanschaufhängung mit ihrer Lagerbohrung und zumindest einem Lagerelement einen Lagerbolzen aufnehmen kann, welcher zur Verbindung mit dem Getriebegehäuse dient. Das hierbei zum Einsatz kommende Lagerelement sitzt hierbei mit der äußeren Lagerschale in der Lagerbohrung ein, während die innere Lagerschale zur Aufnahme des Lagerbolzens vorgesehen ist.

In weiterer Ausgestaltung ist das Getriebegehäuse mit wenigstens einer weiteren Getriebestufe zum Antrieb des Laufrades ausgestattet. Eine Antriebswelle, welche die erste und zweite Getriebestufe verbindet, wird hierbei ebenfalls schräg angeordnet, wobei durch den Kegelradsatz der zweiten Getriebestufe keine Vergrößerung des Getriebegehäuses erforderlich ist.

Der Antriebsmotor ist erfindungsgemäß gegenüber der Vertikalen unter einem Winkel von 15 bis 25 Grad, vorzugsweise 20 bis 23 Grad, besonders bevorzugt von 21 Grad angeordnet.

Durch die Schrägstellung des Antriebsmotors wird hierbei ein Freiraum geschaffen, der die Möglichkeit des Anschlusses einer Deichsel bietet, insbesondere über einen Deichseladapter, wodurch die aufzubringende Lenkbewegung unmittelbar auf das Motorschild oder das Getriebegehäuse übertragen werden kann. Durch diese Maßnahme können beispielsweise Leichtbauvarianten der Antriebsmotoren eingesetzt werden.

Anstelle eines üblichen Drehkranzlagers wird bei der erfindungsgemäßen Antriebsvorrichtung eine Flanschaufhängung verwendet, um das Getriebegehäuse mit dem Chassis des Flurförderfahrzeuges zu verbinden. Die Flanschaufhängung hat hierbei einen wesentlichen Vorteil, und zwar kann diese so konstruiert werden, dass eine unmittelbare Verbindung mit dem Chassis möglich ist, ohne dass das Chassis eine besonders vorbereitete plane Fläche zur Montage aufweisen muss. Durch eine Flanschverbindung erfolgt kein direkter Einfluss auf das Abrollen der Verzahnung der ersten Getriebestufe und somit wirkt sich die Flanschverbindung positiv auf die Getriebegeräuschentwicklung mit einer höheren Laufruhe aus. Soweit ein Drehkranzlager verwendet wird, muss sichergestellt sein, dass eine plane Anschlussfläche des Chassis vorhanden ist, weil sonst die Gefahr einer Verspannung des Drehkranzlagers besteht. Unter dem Gesichtspunkt einfacher Konstruktionen für die Flurförderfahrzeuge ist es von Vorteil, wenn für die Fertigung größere Toleranzen zur Verfügung stehen und auf eine plane Fläche für den Anschluss des Drehkranzlagers verzichtet werden kann. Die Flanschaufhängung bietet hier die Möglichkeit eine einfache Montage mit dem Chassis vorzunehmen, ohne dass Verspannungen auftreten, welche auf das Getriebegehäuse übertragen werden.

Ein weiterer wesentlicher Vorteil dieser Bauweise ergibt sich dadurch, dass gegenüber einem sonst verwendeten Drehkranzlageraußenring eine Verspannung des Drehkranzlagers vermieden wird. Dies ist ein entscheidender Vorteil, weil das Chassis der Flurförderfahrzeuge immer einfacher gebaut wird, sodass eine ebene Planfläche für den Anschluss des Drehkranzlagerinnenrings nicht immer vorhanden ist. Eine Verspannung wird durch die Verwendung einer Flanschaufhängung in jedem Fall vermieden, sodass eine aufwendige Bearbeitung der Chassis entfallen kann.

Durch die höhere Untersetzung des Getriebes ist es möglich, dass ein von der Baugröße her kleinerer Fahrmotor eingesetzt werden kann, welcher wiederum nochmals zu einer deutlichen Reduzierung des Bauraums im Flurförderfahrzeug führt. Ebenso ermöglicht die Verwendung eines kleineren Motors eine Kostenreduzierung bei der Motorenfertigung, wobei derartige Antriebsvorrichtungen mit oder ohne Antriebsmotor ausgeliefert werden können. Es ist lediglich ein Flanschanschluss für ein Antriebsmotor vorhanden, um eine Bestückung durch den Endkunden zu ermöglichen oder alternativ eine Antriebsvorrichtung mit Antriebsmotor ausliefern zu können.

Damit die Baulänge der Getriebeeinheit nicht unnötig vergrößert werden muss, gegebenenfalls reduziert werden kann, erfolgt der Antrieb der ersten Getriebestufe über das Sonnenrad und der Abrieb der ersten Getriebestufe über den Planetenträger. Hierbei ist ferner vorgesehen, dass das Hohlrad drehfest mit dem Getriebegehäuse verbunden ist. Eine solche Ausführung ist besonders für Mitgehgeräte mit einer Fahrzeugdeichsel von Vorteil, weil die Fahrzeugdeichsel direkt an einem Element der Antriebsvorrichtung befestigt werden kann.

In allen vorgenannten Ausführungsvarianten steht hierbei eine kompakte Bauweise im Vordergrund. Bei der Verwendung eines Planetengetriebes als erste Getriebestufe kann ein Verschluss des Getriebegehäuses durch ein Motorschild erfolgen, sodass ein separater Getriebeabschlussdeckel nicht notwendig ist und daher eine Trennfuge entfällt und damit die Abdichtung wesentlich einfacher gestaltet werden kann.

Bei der Verwendung einer Planetenstufe als erste Getriebestufe ist es weiterhin denkbar, dass man den Ölhaushalt des klassischen Einradtriebwerkes teilt und die Planetenstufe mit Fett versorgt und die Kegelradstufe mit einer geringeren Ölmenge ausstattet. Soweit zu diesem Zweck zur Abgrenzung des oberen Ölraumes des Planetengetriebes zum Kegelradsatz hin eine Wellendichtung erforderlich wird, ist dies durch die erzielbaren Vorteile hinnehmbar. Anstelle eines Planetengetriebes könnte alternativ aber auch eine Excentergetriebe, ein reduziertes Planetengetriebe oder ein Wolfrom-Getriebe mit den gleichen Vorteilen eingesetzt werden.

Die Laufräder weisen in der Regel einen Durchmesser von ca. 32 mm auf und gegeben damit einen Hüllkreis vor, der nach Möglichkeit nicht überschritten werden sollte. Aus diesem Grunde muss die Deichsel nach Möglichkeit in dem Hüllkreis angeordnet werden, damit auch in engen Räumen eine optimale Lenkung des Mitgehwagens möglich ist, und zwar sowohl mit als auch ohne Transportgut. Dieses Hüllmaß wird bei einem schräggestellten Antriebsmotor, beispielsweise unter einem Winkel von 21 Grad gegenüber der Vertikalen nicht überschritten und bietet ausreichend Platz zur Befestigung der Deichsel.

Die Verwendung einer Deichsel in Verbindung mit der Schrägstellung des Antriebsmotors, aber auch insbesondere durch die vereinfachte Chassisanbindung und dem Entfall der klassischen Drehkranzlageranbindung zum Fahrzeugrahmen gestaltet sich in diesem Fall leichter als bei herkömmlichen Antriebsvorrichtungen. Bekannt ist beispielsweise, die Deichsel unmittelbar an den Antriebsmotor und somit oberhalb der Chassisplatte der Fahrzeuge anzuflanschen, wodurch aber erhöhte Anforderungen an die Stabilität des Gehäuses des Antriebsmotors gestellt werden. Eine Deichselanbindung unterhalb des Fahrzeugchassis geht immer mit der Vergrößerung des Lenkhüllenkreises der Fahreinheit einher. Über einen Deichseladapter wird dieses Problem gelöst und verändert ebenfalls nicht den Hüllkreis.

Durch die Schrägstellung des Antriebsmotors besteht die Möglichkeit, dass die Deichsel über einen Deichseladapter unmittelbar mit dem Antriebsmotor verbunden wird, wobei vorzugsweise ein Deichseladapter aus einer Hülse besteht, die zur Verschraubung vorgesehen ist.

Die vorliegende Erfindung zeichnet sich dadurch aus, dass eine Antriebsvorrichtung für ein Flurförderfahrzeug mit einem Planetengetriebe als erste Getriebestufe ausgestattet ist, wobei eine zweite Getriebestufe als Kegelradsatz zum Antrieb des Laufrades zum Einsatz kommen kann. Hinzu kommt, dass der Antriebsmotor gegenüber der Vertikalen unter einem Winkel angeordnet ist und das Getriebegehäuse über eine Flanschaufhängung mit dem Chassis des Flurförderfahrzeuges verbunden ist. Durch die Schrägstellung des Antriebsmotors wird eine Einsparung von Bauvolumen erzielt und durch die Verwendung einer Flanschaufhängung anstelle herkömmlicher Drehkranzlager besteht die Möglichkeit einer einfachen Verbindung mit dem Chassis des Flurförderfahrzeuges ohne dass die Befürchtungen einer möglichen Verspannung und erhöhten Getriebegeräuschen eintreten. Die Antriebsvorrichtung kann hierbei mit oder ohne Antriebsmotor ausgeliefert werden, sodass der Kunde in die Lage versetzt wird an den vorhandenen Flanschanschluss für einen Antriebsmotor jeden Motor seiner Wahl anzuschließen.

Die Erfindung wird im Weiteren anhand einer Figur nochmals erläutert.

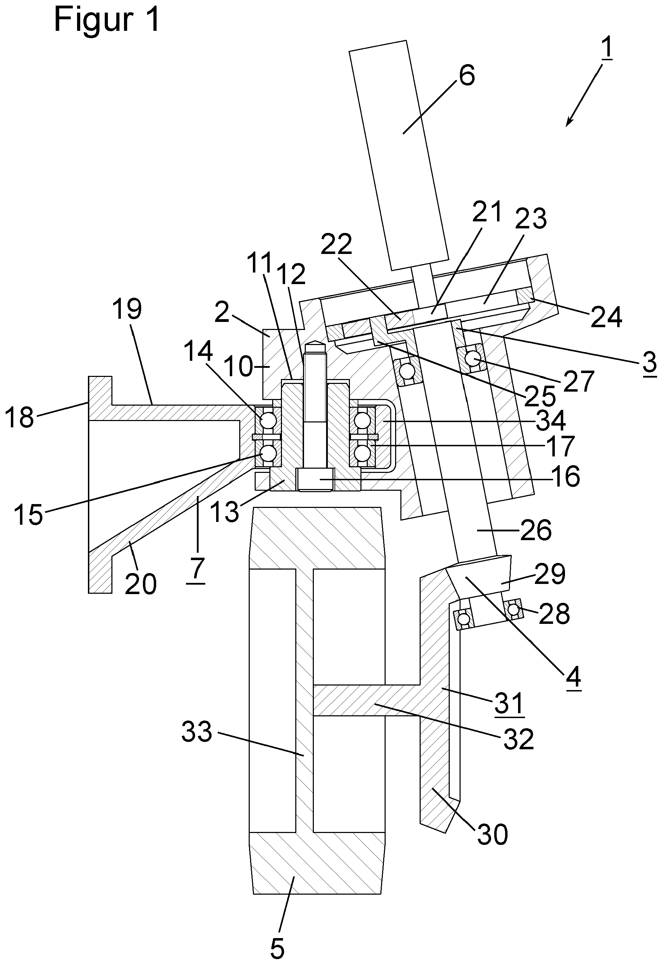

Es zeigt
- Fig. 1: in einer geschnittenen Seitenansicht eine Antriebsvorrichtung für ein Flurförderfahrzeug.

Figur 1 zeigt in einer geschnittenen Seitenansicht eine Antriebsvorrichtung 1, bestehend aus einem Getriebegehäuse 2 mit einer ersten Getriebestufe 3 und einer zweiten Getriebestufe 4. Über die beiden Getriebestufen 3, 4 wird ein Laufrad 5 angetrieben. Oberhalb des Getriebegehäuses 2 und der ersten Getriebestufe 3 ist ein Antriebsmotor 6 angeordnet. Eine Flanschaufhängung 7 kann hierbei mit dem Chassis eines Flurförderfahrzeuges verbunden werden.

In der geschnittenen Seitenansicht wird die Antriebsvorrichtung 1 in einer prinzipiellen Darstellungsweise gezeigt, ohne dass beispielsweise das Getriebegehäuse 2 konstruktiv vollständig dargestellt ist. Das Getriebegehäuse 2 besitzt einen einstückig angeformten Kragen 10, welcher zur Verbindung mit der Flanschaufhängung 7 vorgesehen ist. Zu diesem Zweck verfügt der Kragen 10 über eine Ausnehmung 11 und eine Gewindebohrung 12. Die Ausnehmung 11 dient zur Aufnahme eines Lagerbolzens 13, welcher das Getriebegehäuse 2 mit der Flanschaufhängung 7 und einem Schraubbolzen 16 verbindet. Die Flanschaufhängung besteht aus einer Anschlussfläche 18, zwei Quertraversen 19, 20 und einem Flanschhals 34, welcher mit einer Lagerbohrung 17 ausgestattet ist, um die Lagerelemente 14, 15 aufzunehmen. Die Flanschaufhängung 7 kann hierbei als einstückiger Gusskörper ausgebildet sein. Die Lageraußenringe liegen innerhalb der Lagerbohrung 17 der Flanschaufhängung 7 ein, während die Lagerinnenringe an dem Lagerbolzen 13 anliegen.

Die Anschlussfläche 18 dient zur Anlage an das Chassis eines nicht dargestellten Flurförderfahrzeuges und wird mit diesem verschraubt. Der besondere Vorteil dieser Art der Aufhängung der Antriebsvorrichtung 1 besteht darin, dass über die Flanschaufhängung 7 eine einfache Montage mit dem Chassis des Flurförderfahrzeuges möglich ist. Verspannungen, wie sie beispielsweise bei Drehkranzlager auftreten können, sind hierbei nicht zu befürchten. Auch wenn innerhalb der Flanschaufhängung 7 eine Verspannung beim Verschrauben mit dem Chassis auftreten sollte, wird diese aber nicht zu höheren Getriebegeräuschen führen.

Der Antriebsmotor 6 treibt im gezeigten Ausführungsbeispiel unmittelbar ein Sonnenrad 21 an, welches mit den Planeten 22 des Planetengetriebes 23 kämmt. Die Planeten 22 sind hierbei in einem Hohlrad 24 aufgenommen, welches drehfest innerhalb des Getriebegehäuses 2 gelagert ist. Der Abtrieb erfolgt über den Planetenträger 25, welcher unmittelbar mit einer Antriebswelle 26 verbunden ist. Die Antriebswelle 26 wird innerhalb des Getriebegehäuses 2 über ein erstes Lagerelement 27 und ein zweites Lagerelement 28 abgestützt und besitzt anderenends ein Kegelrad 29, welches mit einem weiteren Kegelrad 30 der zweiten Getriebestufe 4 kämmt. Das Kegelrad 30 ist unmittelbar über eine Welle 32 mit dem Laufradträger 33 verbunden oder ist so einstückig ausgebildet, dass das Laufrad 5 direkt mit dem Kegelrad 30 verbunden werden kann, auf dem das Laufrad 5 befestigt ist. Aufgrund der vorliegenden Konstruktion wird das Drehmoment des Antriebsmotors 6 über die erste Getriebestufe in Form eines Planetengetriebes 23 auf die Antriebswelle 26 übertragen und über die zweite Getriebestufe 31, welche aus einem Kegelrad 29, welches der Antriebswelle 26 zugeordnet ist und ein zweites Kegelrad 30, welches dem Laufrad 5 zugeordnet ist, auf das Laufrad 5 übertragen. Die gesamte Konstruktion bestehend aus Antriebsmotor 6, Getriebegehäuse 2 mit erster 3 und zweiter Getriebestufe 4 sowie Laufradträger 33 und Laufrad 5 ist hierbei über die Flanschaufhängung 7 mit dem Chassis eines nicht dargestellten Flurförderfahrzeuges verbunden. Die besonderen Vorteile bestehen hierbei darin, dass die Flanschaufhängung 7 mit einer Anschlussfläche 18 in einfacher Form mit dem Chassis verschraubt werden kann, gegebenenfalls auch verschweißt werden kann, wobei Spannungen, welche möglicherweise aufgrund von Unebenheiten des Chassis auftreten können, keine Auswirkungen auf die Lagerung der Antriebsvorrichtung 1 herbeiführen.

### Bezugszeichenliste

- 1: Antriebsvorrichtung
- 2: Getriebegehäuse
- 3: Getriebestufe
- 4: Getriebestufe
- 5: Laufrad
- 6: Antriebsmotor
- 7: Flanschaufhängung
- 10: Kragen
- 11: Ausnehmung
- 12: Gewindebohrung
- 13: Lagerbolzen
- 14: Lagerelement
- 15: Lagerelement
- 16: Schraubbolzen
- 17: Lagerbohrung
- 18: Anschlussfläche
- 19: Quertraverse
- 20: Quertraverse
- 21: Sonnenrad
- 22: Planeten
- 23: Planetengetriebe
- 24: Hohlrad
- 25: Planetenträger
- 26: Antriebswelle
- 27: Lagerelement
- 28: Lagerelement
- 29: Kegelrad
- 30: Kegelrad
- 32: Welle
- 33: Laufradträger
- 34: Flanschhals

## Patentansprüche

1. Antriebsvorrichtung (1) für ein Fahrzeug, insbesondere Flurförderfahrzeuge oder vergleichbare Fahrzeuge, umfassend zumindest ein Getriebegehäuse (2) mit mindestens einer Getriebestufe (3) zum Antrieb wenigstens eines Laufrades (5), einen Flanschanschluss für eine Fahrzeugchassisbefestigung und einen Flanschanschluss für einen Antriebsmotor (6), wobei die wenigstens eine Getriebestufe aus einem Planetengetriebe (23), reduzierten Planetengetriebe, Excentergetriebe oder Wolfrom-Getriebe besteht,
**dadurch gekennzeichnet,**
**dass** der Antriebsmotor (6) gegenüber der Vertikalen unter einem Winkel von 15 bis 25 Grad, vorzugsweise 20 bis 23 Grad, besonders bevorzugt von 21 Grad angeordnet ist und der Flanschanschluss für eine Fahrzeugchassisbefestigung derart ausgebildet ist, dass das Getriebegehäuse (2) über eine Flanschaufhängung (7) mit dem Chassis des Fahrzeugs verbunden ist.

2. Antriebsvorrichtung (1) nach Anspruch 1 ,
**dadurch gekennzeichnet,**
**dass** die Flanschaufhängung (7) einenends mit dem Chassis und anderenends mit dem Getriebegehäuse (2) verbunden ist.

3. Antriebsvorrichtung (1) nach Anspruch 1 oder 2,
**dadurch gekennzeichnet,**
**dass** die Flanschaufhängung (7) aus zwei Quertraversen (19, 20), einer Anschlussfläche (18) und einer Lagerbohrung (17) besteht, wobei die Flanschaufhängung (7) mehrteilig oder einstückig ausgebildet ist.

4. Antriebsvorrichtung (1) nach einem der Ansprüche 1, 2 oder 3,
**dadurch gekennzeichnet,**
**dass** die Flanschaufhängung (7) mit einer Anschlussfläche (18) am Chassis anliegt.

5. Antriebsvorrichtung (1) nach einem der Ansprüche 1 bis 4,
**dadurch gekennzeichnet,**
**dass** die Flanschaufhängung (7) eine Lagerbohrung (17) aufweist und über zumindest ein Lagerelement (14, 15) einen Lagerbolzen (13) aufnimmt, welcher mittels eines Schraubbolzens (16) mit dem Getriebegehäuse (2) verbunden ist.

6. Antriebsvorrichtung (1) nach einem der Ansprüche 1 bis 5,
**dadurch gekennzeichnet,**
**dass** die Lagerbohrung (17) zumindest ein Lagerelement (14, 15) aufweist, wobei die äußere Lagerschale in der Lagerbohrung (17) einsitzt und die innere Lagerschale zur Aufnahme des Lagerbolzens (13) vorgesehen ist.

7. Antriebsvorrichtung (1) nach einem der Ansprüche 1 bis 6,
**dadurch gekennzeichnet,**
**dass** der Antrieb über das Sonnenrad (21) und der Abtrieb über den Planetenträger (25) erfolgt, wobei das Hohlrad (24) drehfest mit dem Getriebegehäuse (2) verbunden ist.

8. Antriebsvorrichtung (1) nach einem der Ansprüche 1 bis 7,
**dadurch gekennzeichnet,**
**dass** das Getriebegehäuse (2) mit wenigstens einer weiteren Getriebestufe (4) zum Antrieb des wenigstens einen Laufrades (5) ausgestattet ist.

9. Antriebsvorrichtung (1) nach Anspruch 8,
**dadurch gekennzeichnet,**
**dass** die Antriebswelle (26) der weiteren Getriebestufe (4) über zwei kämmende Kegelräder (29, 30) das Drehmoment auf das wenigstens eine Laufrad (5) überträgt.

10. Antriebsvorrichtung (1) nach Anspruch 9,
**dadurch gekennzeichnet,**
**dass** eine Deichsel über einen Deichseladapter mit dem Antriebsmotor (6) oder Getriebegehäuse (2) verbunden ist.

## Claims

1. Drive device (1) for a vehicle, in particular industrial trucks or comparable vehicles, comprising at least one transmission case (2) with at least one gear stage (3) for driving at least one running wheel (5), a flange connection for a vehicle chassis attachment, and a flange connection for a drive motor (6), wherein the at least one gear stage consists of a planetary gear (23), a reduced planetary gear, an eccentric gearing, or a Wolfrom gear,
**characterized in that**
the drive motor (6) is arranged at an angle of 15 to 25 degrees, preferably 20 to 23 degrees, particularly preferred 21 degrees, with respect to the vertical, and the flange connection is designed for a vehicle chassis attachment such that the transmission case (2) is connected to the chassis of the vehicle via a flange suspension (7).

2. Drive device (1) according to claim 1,
**characterized in that**
the flange suspension (7) is connected at one end with the chassis, and at the other end with the transmission case (2).

3. Drive device (1) according to claim 1 or 2,
**characterized in that**
the flange connection (7) consists of two transverse members (19, 20), a flange facing (18) and a bearing bore (17), wherein the flange suspension (7) is of a multi-piece or integral design.

4. Drive device (1) according to one of claims 1, 2 or 3,
**characterized in that**
the flange suspension (7) abuts against the chassis with a flange facing (18).

5. Drive device (1) according to one of claims 1 to 4,
**characterized in that**
the flange suspension (7) includes a bearing bore (17) and receives a bearing bolt (13) via at least one bearing element (14, 15) which is connected to the transmission case (2) by means of a stud (16).

6. Drive device (1) according to one of claims 1 to 5,
**characterized in that**
the bearing bore (17) includes at least one bearing element (14, 15), wherein the outer bearing shell is seated in the bearing bore (17), and the inner bearing shell is provided for receiving the bearing bolt (13).

7. Drive device (1) according to one of claims 1 to 6,
**characterized in that**
the drive is effected via the sun wheel (21), and the output is effected via the planetary carrier (25), wherein the hollow wheel (24) is connected to the transmission case (2) in a torque-proof manner.

8. Drive device (1) according to one of claims 1 to 7,
**characterized in that**
the transmission case (2) is fitted with at least one further gear stage (4) for driving the at least one running wheel (5).

9. Drive device (1) according to claim 8,
**characterized in that**
the drive shaft (26) of the further gear stage (4) transmits the torque to the at least one running wheel (5) via two meshing bevel wheels (29, 30).

10. Drive device (1) according to claim 9,
**characterized in that**
a drawbar is connected with the drive motor (6) or the transmission case (2) via a drawbar adapter.

## Revendications

1. Mécanisme d'entraînement (1) pour un véhicule, notamment chariot élévateur ou véhicule comparable, comportant au moins un carter de transmission (2) à au moins un étage d'engrenage (3) pour entraîner au moins une roue (5), un raccord à bride pour une fixation de châssis de véhicule et un raccord à bride pour un moteur d'entraînement (6), l'au moins un étage d'engrenage consistant en un engrenage planétaire (23), un engrenage planétaire réduit, un engrenage excentrique ou un engrenage Wolfrom,
**caractérisé en ce que**
le moteur d'entraînement (6) est disposé, par rapport à la verticale, sous un angle de 15 à 25 degrés, de préférence de 20 à 23 degrés, de préférence encore de 21 degrés, le raccord à bride pour une telle fixation de châssis de véhicule étant configuré tel que le carter de transmission (2) est relié au châssis du véhicule via un une suspension à bride (7).

2. Mécanisme d'entraînement (1) selon la revendication 1,
**caractérisé en ce que**
la suspension à bride (7) est reliée d'un côté au châssis et de l'autre côté au carter de transmission (2).

3. Mécanisme d'entraînement (1) selon la revendication 1 ou 2,
**caractérisé en ce que**
la suspension à bride (7) se compose de deux traverses (19, 20), d'une surface de raccord (18) et d'un alésage de palier (17), la suspension à bride (7) étant réalisée en une ou plusieurs parties.

4. Mécanisme d'entraînement (1) selon l'une quelconque des revendications 1, 2 ou 3,
**caractérisé en ce que**
la suspension à bride (7) s'appuie sur le châssis par une zone de connexion (18).

5. Mécanisme d'entraînement (1) selon l'une quelconque des revendications 1 à 4,
**caractérisé en ce que**
la suspension à bride (7) comporte un alésage de palier (17) et accueillit, via au moins un élément de palier (14, 15), un axe de palier (13) relié au carter de transmission (2) grâce à un boulon fileté (16).

6. Mécanisme d'entraînement (1) selon l'une quelconque des revendications 1 à 5,
**caractérisé en ce que**
l'alésage de palier (17) présente au moins un élément de palier (14, 15), le coussinet de palier extérieur s'emboîtant dans l'alésage de palier (17), le coussinet de palier intérieur étant prévu pour recevoir l'axe de palier (13).

7. Mécanisme d'entraînement (1) selon l'une quelconque des revendications 1 à 6,
**caractérisé en ce que**
l'entraînement étant assuré grâce à la roue solaire (21), la prise de force étant assurée par le porte-satellites (25), la couronne (24) étant reliée au carter de transmission (2) de manière à résister à la torsion.

8. Mécanisme d'entraînement (1) selon l'une quelconque des revendications 1 à 7,
**caractérisé en ce que**
le carter de transmission (2) est pourvu d'au moins un étage d'engrenage (4) supplémentaire pour l'entraînement de l'au moins une roue (5).

9. Mécanisme d'entraînement (1) selon la revendication 8,
**caractérisé en ce que**
l'arbre de transmission (26) de l'étage d'engrenage (4) supplémentaire transmet le couple à l'au moins une roue (5) par l'intermédiaire de deux pignons coniques (29, 30) qui s'engrènent.

10. Mécanisme d'entraînement (1) selon la revendication 9,
**caractérisé en ce que**
une barre d'attelage est reliée au moteur d'entraînement (6) ou au carter de transmission (2) par un adaptateur de barre d'attelage.
